# EUROPEAN PATENT APPLICATION

(11) **EP 4 723 774 A1**
(43) Date of publication of application: **08.04.2026**
(21) Application number: 24810291.5
(22) Date of filing: 16.05.2024
(51) Int. Cl.: H04W 72/0446

(54) **METHOD AND APPARATUS USED IN NODE FOR WIRELESS COMMUNICATION**

(30) Priority: 24.05.2023 CN 202310595451
(71) Applicant: Apogee Networks, LLC, Plano, TX 75024 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/093603
(87) International publication number: WO 2024/240044

(57) **Abstract**

Disclosed in the present application are a method and apparatus used in a node for wireless communication. A first receiver receives first RRC signaling and a first information block; the first receiver receives a first PDSCH, the receiving of the first PDSCH being used for acquiring a first RAR uplink grant; and a first transmitter sends a plurality of repetitions of a first PUSCH in N time slots, wherein the first RAR uplink grant is used for scheduling the first PUSCH; the first RAR uplink grant is used to indicate N; N is a positive integer greater than 1; the N time slots are first N first-type time slots starting from a reference time slot; in the first N first-type time slots starting from the reference time slot, one repetition of the first PUSCH only comprises symbols other than a first type symbol; whether at least one symbol indicated by the first RRC signaling to be a downlink symbol is a first type symbol depends on the first information block.

## Description

### Technical Field

The present application relates to a transmission method and apparatus in a wireless communication system, in particular to a transmission method and apparatus for wireless signals in a wireless communication system supporting a cellular network.

### Background Art

Sending a plurality of repetitions of a PUSCH (Physical uplink shared channel) scheduled by an RAR (Random Access Response) uplink grant in a plurality of slots is an effective means to improve random access performance.

### Summary of the Invention

When symbols indicated by one piece of RRC signaling to be downlink symbols may belong to different types of symbols, how to determine slots in which a plurality of repetitions of a PUSCH scheduled by an RAR uplink grant are located is one important problem that needs to be considered; and the present application discloses a solution for the above problem. The present application can be applied to various wireless communication scenarios, such as scenarios supporting full-duplex communication, scenarios only supporting half-duplex communication, eMBB (Enhanced Mobile Broadband), URLLC (Ultra-Reliable Low-Latency Communication), Internet of Vehicles, Internet of Things, NTNs (Non-Terrestrial Networks), and achieves similar technical effects. In addition, using a unified solution for different scenarios (including but not limited to scenarios supporting full-duplex communication, scenarios only supporting half-duplex communication, eMBB, URLLC, Internet of Vehicles, Internet of Things, and NTNs) also helps reduce hardware complexity and costs, or improve performance. In the absence of conflicts, embodiments and features in the embodiments in any node of the present application can be applied to any other node. In the absence of conflicts, the embodiments and features in the embodiments of the present application can be arbitrarily combined with each other.

As one embodiment, interpretations of terminologies in the present application refer to definitions of TS38 series of the standard protocol of 3GPP.

As one embodiment, the interpretations of the terminologies in the present application refer to definitions of TS37 series of the standard protocol of 3GPP.

The present application discloses a method used in a first node for wireless communication, characterized by comprising:
receiving first RRC signaling and a first information block, at least one symbol being indicated by the first RRC signaling to be a downlink symbol;
receiving a first PDSCH, the receiving of the first PDSCH being used for acquiring a first RAR uplink grant; and
sending a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

As one embodiment, a problem to be solved in the present application comprises: how to determine the N slots used for sending the plurality of repetitions of the first PUSCH scheduled by the first RAR uplink grant.

As one embodiment, the problem to be solved in the present application comprises: how to determine the first N first-type slots starting from the reference slot based on the first information block.

As one embodiment, the problem to be solved in the present application comprises: how to reasonably increase resources available for sending a PUSCH scheduled by an RAR uplink grant to improve the uplink capacity.

As one embodiment, the problem to be solved in the present application comprises: after introducing symbols available for full-duplex operations, how to send a plurality of repetitions of a Msg3 PUSCH.

As one embodiment, the problem to be solved in the present application comprises: how to enhance a transmission of an uplink.

As one embodiment, the problem to be solved in the present application comprises: how to improve the scheduling flexibility.

As one embodiment, benefits of the above method comprise: facilitating the improvement of the resource utilization efficiency.

As one embodiment, the benefits of the above method comprise: being able to effectively utilize symbols that are indicated by the first RRC signaling to be downlink symbols and do not belong to the first type symbol to send the plurality of repetitions of the first PUSCH, thereby improving the uplink capacity or reducing the transmission delay of the first PUSCH.

As one embodiment, the benefits of the above method comprise: improving the random access performance.

As one embodiment, the benefits of the above method comprise: facilitating a plurality of repeated transmissions of a Msg3 PUSCH on symbols available for full-duplex operations.

As one embodiment, the benefits of the above method comprise: having good compatibility for existing 3GPP technical specifications.

According to one aspect of the present application, the above method is characterized in that,
the reference slot depends on a first numerical value, and the first numerical value is an additional subcarrier spacing-specific slot delay value for a first transmission of a PUSCH scheduled by an RAR or a fallbackRAR.

According to one aspect of the present application, the above method is characterized in that,
an index of the reference slot is equal to n plus k plus the first numerical value, n is an index of a slot in which the first PDSCH ends, k is a slot offset, and the first numerical value is the additional subcarrier spacing-specific slot delay value for the first transmission of a PUSCH scheduled by an RAR or a fallbackRAR.

As one embodiment, the benefits of the above method comprise: effectively reducing the scheduling delay on the premise of ensuring sufficient processing time for the plurality of repeated sending of the first PUSCH.

According to one aspect of the present application, the above method is characterized in that,
symbols that are other than a symbol configured by the first information block to be available for an uplink transmission and are indicated by the first RRC signaling to be downlink symbols belong to the first type symbol.

According to one aspect of the present application, the above method is characterized in that,
symbols that are configured by the first information block to be available for an uplink transmission and are indicated by the first RRC signaling to be downlink symbols do not belong to the first type symbol.

As one embodiment, the benefits of the above method comprise: being able to effectively utilize symbols that are configured by the first information block to be available for an uplink transmission and are indicated by the first RRC signaling to be downlink symbols to send the plurality of repetitions of the first PUSCH, thereby improving the uplink capacity or reducing the transmission delay of the first PUSCH.

According to one aspect of the present application, the above method is characterized in that,
symbols indicated by the first RRC signaling to be uplink symbols belong to the first type symbol.

As one embodiment, the benefits of the above method comprise: avoiding a plurality of repetitions of a PUSCH scheduled by an RAR uplink grant both occupying symbols that are other than a symbol configured by the first information block to be available for an uplink transmission and are indicated by the first RRC signaling to be downlink symbols, and occupying symbols indicated by the first RRC signaling to be uplink symbols; and simplifying the system design, or reducing the processing complexity of PUSCH reception.

According to one aspect of the present application, the above method is characterized in that,
the first RRC signaling is tdd-UL-DL-ConfigurationCommon.

As one embodiment, the benefits of the above method comprise: facilitating redefinition of cell specific downlink symbols.

As one embodiment, the benefits of the above method comprise: being able to effectively utilize symbols that are indicated by tdd-UL-DL-ConfigurationCommon to be downlink symbols and do not belong to the first type symbol to send the plurality of repetitions of the first PUSCH, thereby improving the uplink capacity or reducing the transmission delay of the first PUSCH.

According to one aspect of the present application, the above method is characterized in that,
in each slot in the first N first-type slots starting from the reference slot, frequency domain resources occupied by the one repetition of the first PUSCH do not exceed frequency domain resources available for a PUSCH scheduled by an RAR uplink grant.

As one embodiment, the benefits of the above method comprise: ensuring the effectiveness of the scheduling of the first RAR uplink grant.

According to one aspect of the present application, the above method is characterized in that,
the first information block comprises configuration information of resources available for full-duplex operations.

As one embodiment, the benefits of the above method comprise: helping to support full-duplex operations.

The present application discloses a method used in a second node for wireless communication, characterized by comprising:
sending first RRC signaling and a first information block, at least one symbol being indicated by the first RRC signaling to be a downlink symbol;
sending a first PDSCH, the first PDSCH carrying a first RAR uplink grant; and
receiving a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

According to one aspect of the present application, the above method is characterized in that,
the reference slot depends on a first numerical value, and the first numerical value is an additional subcarrier spacing-specific slot delay value for a first transmission of a PUSCH scheduled by an RAR or a fallbackRAR.

According to one aspect of the present application, the above method is characterized in that,
an index of the reference slot is equal to n plus k plus the first numerical value, n is an index of a slot in which the first PDSCH ends, k is a slot offset, and the first numerical value is the additional subcarrier spacing-specific slot delay value for the first transmission of a PUSCH scheduled by an RAR or a fallbackRAR.

According to one aspect of the present application, the above method is characterized in that,
symbols that are other than a symbol configured by the first information block to be available for an uplink transmission and are indicated by the first RRC signaling to be downlink symbols belong to the first type symbol.

According to one aspect of the present application, the above method is characterized in that,
symbols that are configured by the first information block to be available for the uplink transmission and are indicated by the first RRC signaling to be downlink symbols do not belong to the first type symbol.

According to one aspect of the present application, the above method is characterized in that,
symbols indicated by the first RRC signaling to be uplink symbols belong to the first type symbol.

According to one aspect of the present application, the above method is characterized in that,
the first RRC signaling is tdd-UL-DL-ConfigurationCommon.

According to one aspect of the present application, the above method is characterized in that,
in each slot in the first N first-type slots starting from the reference slot, frequency domain resources occupied by the one repetition of the first PUSCH do not exceed frequency domain resources available for a PUSCH scheduled by an RAR uplink grant.

According to one aspect of the present application, the above method is characterized in that,
the first information block comprises configuration information of resources available for full-duplex operations.

The present application discloses a first node used for wireless communication, characterized by comprising:
a first receiver receiving first RRC signaling and a first information block, at least one symbol being indicated by the first RRC signaling to be a downlink symbol;
the first receiver receiving a first PDSCH, the receiving of the first PDSCH being used for acquiring a first RAR uplink grant; and
a first transmitter sending a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

The present application discloses a second node used for wireless communication, characterized by comprising:
a second transmitter sending first RRC signaling and a first information block, at least one symbol being indicated by the first RRC signaling to be a downlink symbol;
the second transmitter sending a first PDSCH, the first PDSCH carrying a first RAR uplink grant; and
a second receiver receiving a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

### Brief Description of the Drawings

Other features, purposes and advantages of the present application will become more apparent by reading the detailed description of the non-limiting embodiments with reference to the following drawings:
FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first communication device and a second communication device according to one embodiment of the present application;
FIG. 5 shows a flow chart of a signal transmission according to one embodiment of the present application;
FIG. 6 shows a schematic diagram explaining an index of a reference slot according to one embodiment of the present application;
FIG. 7 shows a schematic diagram of a relationship between symbols indicated by first RRC signaling to be downlink symbols and a first type symbol according to one embodiment of the present application;
FIG. 8 shows a schematic diagram explaining frequency domain resources occupied by one repetition of a first PUSCH according to one embodiment of the present application;
FIG. 9 shows a schematic diagram explaining first N first-type slots starting from a reference slot according to one embodiment of the present application;
FIG. 10 shows a schematic diagram explaining first N first-type slots starting from a reference slot according to one embodiment of the present application;
FIG. 11 shows a structural block diagram of a processing apparatus in a first node device according to one embodiment of the present application; and
FIG. 12 shows a structural block diagram of a processing apparatus in a second node device according to one embodiment of the present application.

### Detailed Description of Embodiments

The technical solution of the present application will be further described in detail below in conjunction with the drawings. It should be noted that, in the absence of conflicts, embodiments and features in the embodiments of the present application can be arbitrarily combined with each other.

### Embodiment 1

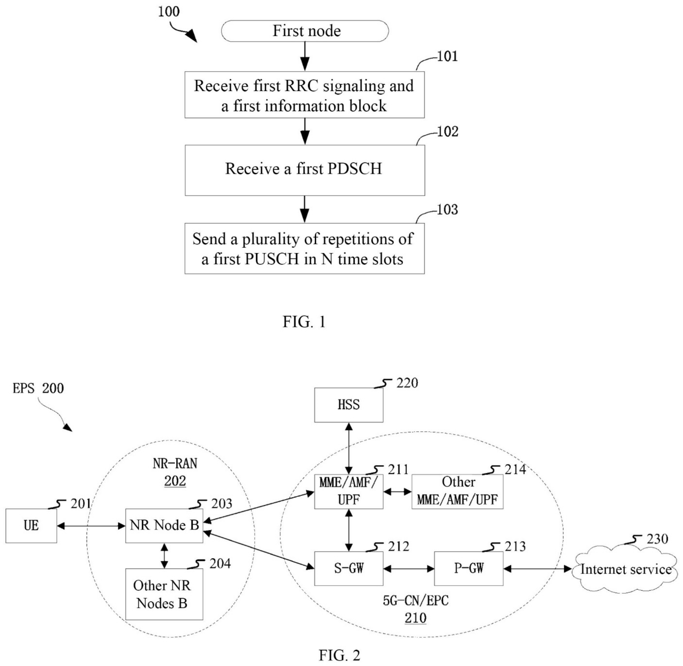

Embodiment 1 illustrates a processing flow chart of a first node according to one embodiment of the present application, as shown in FIG. 1.

In Embodiment 1, the first node in the present application receives first RRC signaling and a first information block in step 101; receives a first PDSCH in step 102; and sends a plurality of repetitions of a first PUSCH in N slots in step 103.

In Embodiment 1, at least one symbol is indicated by the first RRC signaling to be a downlink symbol; the receiving of the first PDSCH is used for acquiring a first RAR uplink grant; the first RAR uplink grant is used for scheduling the first PUSCH; the first RAR uplink grant is used for indicating N; N is a positive integer greater than 1; the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

As one embodiment, the first RRC signaling comprises at least one field in at least one IE (Information Element).

As one embodiment, the first RRC signaling is one IE.

As one embodiment, the first RRC signaling is one field in one IE.

As one embodiment, the first RRC signaling is one RRC IE.

As one embodiment, the first RRC signaling comprises one RRC parameter.

As one embodiment, the first RRC signaling comprises time-domain configuration information.

As one embodiment, the first RRC signaling comprises TDD (Time Division Duplexing) configuration information of a UL/DL (Uplink/Downlink).

As one embodiment, the first RRC signaling comprises tdd-UL-DL-ConfigurationCommon.

As one embodiment, the first RRC signaling comprises tdd-UL-DL-ConfigurationDedicated.

As one embodiment, the first RRC signaling comprises tdd-UL-DL-ConfigurationCommon and tdd-UL-DL-ConfigurationDedicated.

As one embodiment, the first RRC signaling is tdd-UL-DL-ConfigurationCommon.

As one embodiment, the first RRC signaling is tdd-UL-DL-ConfigurationDedicated.

As one embodiment, a name of the first RRC signaling comprises tdd-UL-DL-ConfigurationCommon.

As one embodiment, the name of the first RRC signaling comprises tdd-UL-DL-ConfigurationDedicated.

As one embodiment, the first information block comprises physical layer signaling.

As one embodiment, the first information block comprises DCI (Downlink control information).

As one embodiment, the first information block comprises at least one field in one DCI format.

As one embodiment, benefits of the above method comprise: improving the transmission timeliness of information comprised in the first information block.

As one embodiment, the first information block comprises higher layer signaling.

As one embodiment, the first information block comprises a MAC CE (Medium Access Control layer Control Element).

As one embodiment, the first information block comprises RRC (Radio Resource Control) signaling.

As one embodiment, the first information block comprises at least one field in at least one IE (Information Element).

As one embodiment, the benefits of the above method comprise: improving the transmission reliability of information comprised in the first information block.

As one embodiment, the first information block is DCI.

As one embodiment, the first information block is one field in one DCI format.

As one embodiment, the first information block is one MAC CE.

As one embodiment, the first information block is one field in one MAC CE.

As one embodiment, the first information block is one RRC IE.

As one embodiment, the first information block is one field in one IE.

As one embodiment, the first information block is RRC signaling.

As one embodiment, a name of the first information block comprises subband.

As one embodiment, the name of the first information block comprises SBFD.

As one embodiment, the first information block comprises configuration information for at least one frequency band resource.

As one embodiment, the first information block comprises configuration information of time domain resources.

As one embodiment, the first information block comprises configuration information of symbol types.

As one embodiment, the first information block comprises configuration information of resources for full-duplex operations.

As one embodiment, the first information block comprises configuration information of resources for a full-duplex mode.

As one embodiment, the first information block does not comprise tdd-UL-DL-ConfigurationCommon.

As one embodiment, the first information block is RRC signaling other than the first RRC signaling.

As one embodiment, the first RRC signaling is used for indicating a link direction of at least 1 symbol.

As one embodiment, the link direction comprises a downlink and an uplink.

As one embodiment, the meaning of the expression of "receiving a first PDSCH, the receiving of the first PDSCH being used for acquiring a first RAR uplink grant" is:
a first transport block is received in the first PDSCH (Physical downlink shared channel); the first node passes the first transport block to higher layers, and the higher layers parse the first transport block for a RAPID (random access preamble identity) associated with a PRACH (Physical random access channel) transmission; and the higher layers identify the RAPID in an RAR message of the first transport block, and indicate the first RAR uplink grant to a physical layer.

As one embodiment, the meaning of the expression of "receiving a first PDSCH, the receiving of the first PDSCH being used for acquiring a first RAR uplink grant" is: one RAR (Random Access Response) message conveyed in the first PDSCH is received, and this RAR message comprises the first RAR uplink grant (UL grant).

As one embodiment, the meaning of the expression of "receiving a first PDSCH, the receiving of the first PDSCH being used for acquiring a first RAR uplink grant" is: one signal is received in the first PDSCH, and this signal carries the first RAR uplink grant.

As one embodiment, the plurality of repetitions of the first PUSCH comply with a PUSCH (Physical uplink shared channel) repetition Type A.

As one embodiment, a part of the plurality of repetitions of the first PUSCH complies with the PUSCH repetition Type A, and another part of the plurality of repetitions of the first PUSCH complies with a PUSCH repetition Type B.

As one embodiment, the benefits of the above method comprise: improving the configuration flexibility.

As one embodiment, as viewed in a time domain, the plurality of repetitions of the first PUSCH are respectively in different slots among the N slots.

As one embodiment, as viewed in the time domain, there exists one repetition among the plurality of repetitions of the first PUSCH in each slot among the N slots.

As one embodiment, each repetition among the plurality of repetitions of the first PUSCH occupies at least one symbol in the time domain.

As one embodiment, the meaning of the expression of "sends a plurality of repetitions of a first PUSCH in N slots" is: the first transport block is sent in each repetition among the plurality of repetitions of the first PUSCH, and any one repetition among the plurality of repetitions of the first PUSCH is in one slot among the N slots in the time domain.

As one embodiment, the meaning of the expression of "sends a plurality of repetitions of a first PUSCH in N slots" is: a signal is sent in the first PUSCH, the first PUSCH occupies the N slots, and part of the first PUSCH in each slot in the N slots is one repetition of the first PUSCH.

As one embodiment, the meaning of the expression of "sends a plurality of repetitions of a first PUSCH in N slots" is: the first transport block is repeatedly sent multiple times in the N slots, and each repeated sending of the first transport block in the N slots occupies one repetition of the first PUSCH.

As one embodiment, the first transport block comprises a plurality of bits.

As one embodiment, the first transport block is a UL-SCH (Uplink Shared Channel) transport block.

As one embodiment, the first transport block carries user data.

As one embodiment, the first RAR uplink grant comprises bits indicating frequency domain resources assigned to the first PUSCH.

As one embodiment, the first RAR uplink grant comprises bits indicating time domain resources assigned to the first PUSCH.

As one embodiment, the first RAR uplink grant comprises bits indicating an MCS (Modulation and Coding Scheme) for the first PUSCH.

As one embodiment, the first RAR uplink grant comprises bits indicating a transmission waveform used by the first PUSCH, and the transmission waveform used by the first PUSCH is one of CP-OFDM (Cyclic Prefix-OFDM (Orthogonal frequency division multiplex)) or DFT-s-OFDM (Discrete Fourier Transform-spread-OFDM).

As one embodiment, the benefits of the above method comprise: improving the flexibility of waveform selection and facilitating the improvement of the transmission performance of the first PUSCH.

As one embodiment, the first RAR uplink grant is used for scheduling the plurality of repetitions of the first PUSCH.

As one embodiment, the first RAR uplink grant is used for indicating the plurality of repetitions of the first PUSCH.

As one embodiment, the first PUSCH is a Msg3 PUSCH.

As one embodiment, the first RAR uplink grant explicitly indicates N.

As one embodiment, the first RAR uplink grant implicitly indicates N.

As one embodiment, one field in the first RAR uplink grant indicates N.

As one embodiment, the meaning of the expression of "the first RAR uplink grant is used for indicating the N" is: at least one bit of an MCS field in the first RAR uplink grant indicates N.

As one embodiment, the benefits of the above method comprise: effectively saving the bit overhead in the first RAR uplink grant.

As one embodiment, the benefits of the above method comprise: a simple and effective signaling design.

As one embodiment, 2 MSBs (most significant bits) of an MCS field in the first RAR uplink grant indicate N.

As one embodiment, N is indicated from a first numerical value set, and the first numerical value set comprises 4 numerical values.

As one embodiment, the first numerical value set is {1,2,3,4}.

As one embodiment, the first numerical value set is configurable.

As one embodiment, the first numerical value set is configured by numberOfMsg3-RepetitionsList.

As one embodiment, the benefits of the above method comprise: having good compatibility with the meaning of an MCS field in existing 3GPP protocols.

As one embodiment, N is not greater than 16.

As one embodiment, N is one of 1 to 32.

As one embodiment, N is not greater than 1024.

As one embodiment, the N slots comprise the reference slot.

As one embodiment, the reference slot does not belong to the first-type slot, and the N slots do not comprise the reference slot.

As one embodiment, each slot in the first N first-type slots starting from the reference slot is not earlier than the reference slot.

As one embodiment, in the first N first-type slots starting from the reference slot, each repetition among the plurality of repetitions of the first PUSCH only comprises symbols other than the first type symbol.

As one embodiment, the meaning of the expression of "one repetition of the first PUSCH only comprises symbols other than a first type symbol" is: one repetition of the first PUSCH does not comprise the first type symbol.

As one embodiment, the meaning of the expression of "one repetition of the first PUSCH only comprises symbols other than a first type symbol" is: one repetition of the first PUSCH does not overlap with the first type symbol in the time domain.

As one embodiment, the meaning of the expression of "one repetition of the first PUSCH only comprises symbols other than a first type symbol" is: one repetition of the first PUSCH does not occupy the first type symbol in the time domain.

As one embodiment, in each first-type slot among the first N first-type slots starting from the reference slot, one repetition of the first PUSCH only comprises symbols other than the first type symbol.

As one embodiment, symbols other than the first type symbol do not belong to the first type symbol.

As one embodiment, a target slot is one slot not earlier than the reference slot; if a first resource block comprises the first type symbol in the target slot, the target slot does not belong to the first-type slot; and the first resource block is a time domain resource assignment indicated by the first PUSCH within a slot.

As one embodiment, the target slot is one slot not earlier than the reference slot; if the first resource block overlaps with the first type symbol in the target slot, the target slot does not belong to the first-type slot; and the first resource block is the time domain resource assignment indicated by the first PUSCH within a slot.

As one embodiment, the target slot is one slot not earlier than the reference slot; if at least one symbol in the first resource block overlaps with the first type symbol in the target slot, the target slot does not belong to the first-type slot; and the first resource block is the time domain resource assignment indicated by the first PUSCH within a slot.

As one embodiment, the target slot is one slot not earlier than the reference slot; if the first resource block only comprises symbols other than the first type symbol in the target slot, the target slot belongs to the first-type slot; and the first resource block is the time domain resource assignment indicated by the first PUSCH within a slot.

As one embodiment, the target slot is one slot not earlier than the reference slot; if the first resource block does not comprise the first type symbol in the target slot, the target slot belongs to the first-type slot; and the first resource block is the time domain resource assignment indicated by the first PUSCH within a slot.

As one embodiment, the target slot is one slot not earlier than the reference slot; if the first resource block does not overlap with the first type symbol in the target slot, the target slot belongs to the first-type slot; and the first resource block is the time domain resource assignment indicated by the first PUSCH within a slot.

As one embodiment, in the first-type slot, when one repetition of the first PUSCH exists, the one repetition of the first PUSCH only comprises symbols other than the first type symbol.

As one embodiment, it is assumed that the one repetition of the first PUSCH exists in the target slot; if the one repetition of the first PUSCH only comprises symbols other than the first type symbol, the target slot belongs to the first-type slot; otherwise, the target slot does not belong to the first-type slot.

As one embodiment, in the first-type slot, the time domain resource assignment indicated by the first PUSCH within a slot only comprises symbols other than the first type symbol.

As one embodiment, the meaning of the expression of "a time domain resource assignment indicated by the first PUSCH within a slot only comprises symbols other than the first type symbol" is: the time domain resource assignment indicated by the first PUSCH within a slot does not comprise the first type symbol.

As one embodiment, the meaning of the expression of "a time domain resource assignment indicated by the first PUSCH within a slot only comprises symbols other than the first type symbol" is: the time domain resource assignment indicated by the first PUSCH within a slot does not overlap with the first type symbol.

As one embodiment, the plurality of repetitions of the first PUSCH are respectively in different slots in the time domain, and the time domain resource assignment indicated by the first PUSCH within a slot is used for each repetition among the plurality of repetitions of the first PUSCH.

As one embodiment, the time domain resource assignment indicated by the first PUSCH within a slot is: the time domain resource assignment indicated by the first RAR uplink grant within a slot.

As one embodiment, the time domain resource assignment indicated by the first PUSCH within a slot is: a time domain resource assignment indicated by a value of a TDRA (Time domain resource assignment) information field in the first RAR uplink grant within a slot.

As one embodiment, the time domain resource assignment indicated by the first PUSCH within a slot is: a symbol indicated by one row of a used resource assignment table in a slot; and a value of a TDRA field of the first RAR uplink grant provides an index corresponding to the one row in the used resource assignment table.

As one embodiment, one resource assignment table comprises a plurality of rows, and each row among the plurality of rows defines a group of parameters for acquiring a time domain resource assignment.

As one embodiment, one resource assignment table comprises a plurality of rows, and each row among the plurality of rows at least defines a start and length indicator (SLIV).

As one embodiment, one resource assignment table comprises a plurality of rows, and each row among the plurality of rows at least defines a start symbol and an assignment length.

As one embodiment, one resource assignment table comprises a plurality of rows, and each row among the plurality of rows at least defines a slot offset.

As one embodiment, one resource assignment table comprises a plurality of rows, and each row among the plurality of rows at least defines a PUSCH mapping type.

As one embodiment, the meaning of the expression of "whether at least one symbol indicated by the first RRC signaling to be a downlink symbol belongs to the first type symbol depends on the first information block" is: whether one symbol indicated by the first RRC signaling to be a downlink symbol belongs to the first type symbol depends on the first information block.

As one embodiment, the meaning of the expression of "whether at least one symbol indicated by the first RRC signaling to be a downlink symbol belongs to the first type symbol depends on the first information block" is: whether a plurality of symbols indicated by the first RRC signaling to be downlink symbols belong to the first type symbol depends on the first information block.

As one embodiment, the first information block is used for determining whether one or more symbols indicated by the first RRC signaling to be downlink symbols belong to the first type symbol.

As one embodiment, whether one or more symbols indicated by the first RRC signaling to be downlink symbols belong to the first type symbol is determined by a configuration of the first information block.

As one embodiment, a slot in which the first PDSCH ends indicates the reference slot.

As one embodiment, an index of a slot in which the first PDSCH ends explicitly indicates the reference slot.

As one embodiment, an index of a slot in which the first PDSCH ends implicitly indicates the reference slot.

As one embodiment, the first node infers the reference slot based on a slot in which the first PDSCH ends.

As one embodiment, a plurality of numerical values are used together for determining the reference slot, and an index of a slot in which the first PDSCH ends is one of the plurality of numerical values.

As one sub-embodiment of the above embodiment, the plurality of numerical values comprise a first numerical value, and the first numerical value is an additional subcarrier spacing-specific slot delay value for a first transmission of a PUSCH scheduled by an RAR.

As one embodiment, an index of the reference slot is equal to the result of taking the modulus 7 of the sum of 3 times an index of a slot in which the first PDSCH ends and 645796, plus the index of the slot in which the first PDSCH ends, plus 2.

As one embodiment, an index of the reference slot is equal to the result of taking the modulus 7 of the sum of 3 times an index of a slot in which the first PDSCH ends and 645796, plus the index of the slot in which the first PDSCH ends, and plus 2 times the first numerical value, and the first numerical value is the additional subcarrier spacing-specific slot delay value for the first transmission of a PUSCH scheduled by an RAR.

As one embodiment, an index of the reference slot is equal to 2 raised to the b power plus 1, b is equal to the product of an index of the slot in which the first PDSCH ends and the first numerical value, and the first numerical value is the additional subcarrier spacing-specific slot delay value for the first transmission of a PUSCH scheduled by an RAR.

As one embodiment, an index of the reference slot is linearly related to an index of a slot in which the first PDSCH ends.

As one embodiment, the meaning of the expression of "the reference slot depends on a slot in which the first PDSCH ends" is: an index of the reference slot is equal to the sum of a plurality of numerical values, and an index of a slot in which the first PDSCH ends is one of the plurality of numerical values.

As one embodiment, the reference slot depends on the first numerical value, and the first numerical value is a slot delay value related to a subcarrier spacing.

As one embodiment, the first numerical value is the additional subcarrier spacing-specific slot delay value for the first transmission of a PUSCH scheduled by an RAR or a fallbackRAR.

As one embodiment, the reference slot depends on the first numerical value, and the first numerical value is the additional subcarrier spacing-specific slot delay value for the first transmission of a PUSCH scheduled by an RAR.

As one embodiment, the first numerical value is a slot delay value indicated by a subcarrier spacing.

As one embodiment, an index of the reference slot is equal to the sum of a plurality of numerical values, and the plurality of numerical values comprise the first numerical value.

As one embodiment, an index of the reference slot is linearly related to the first numerical value.

As one embodiment, an index of the reference slot is equal to the sum of a plurality of numerical values, and the plurality of numerical values comprise a slot offset indicated by a value of a TDRA field of the first RAR uplink grant.

As one embodiment, symbols that are other than a symbol configured by the first information block to be available for full-duplex operations and are indicated by the first RRC signaling to be downlink symbols belong to the first type symbol.

As one embodiment, symbols that are configured by the first information block to be available for full-duplex operations and are indicated by the first RRC signaling to be downlink symbols do not belong to the first type symbol.

As one embodiment, symbols that are other than a symbol configured by the first information block for full-duplex modes and are indicated by the first RRC signaling to be downlink symbols belong to the first type symbol.

As one embodiment, symbols that are configured by the first information block for full-duplex modes and are indicated by the first RRC signaling to be downlink symbols do not belong to the first type symbol.

As one embodiment, the benefits of the above method comprise: helping to support full-duplex operations.

As one embodiment, the first information block comprises one bit sequence, each bit in this bit sequence is mapped onto at least one symbol, and symbols that correspond to one bit set to 0 in this bit sequence and are indicated by the first RRC signaling to be downlink symbols belong to the first type symbol.

As one sub-embodiment of the above embodiment, symbols that correspond to one bit set to 1 in this bit sequence and are indicated by the first RRC signaling to be downlink symbols do not belong to the first type symbol.

As one embodiment, the first information block comprises one bit sequence, each bit in this bit sequence is mapped onto at least one symbol, and symbols that correspond to one bit set to 1 in this bit sequence and are indicated by the first RRC signaling to be downlink symbols belong to the first type symbol.

As one sub-embodiment of the above embodiment, symbols that correspond to one bit set to 0 in this bit sequence and are indicated by the first RRC signaling to be downlink symbols do not belong to the first type symbol.

As one embodiment, when a first symbol is indicated by the first RRC signaling to be a downlink symbol and is a symbol other than a symbol explicitly indicated by the first information block, the first symbol belongs to the first type symbol.

As one embodiment, one symbol in the present application is a time domain symbol.

As one embodiment, one symbol in the present application is an OFDM (Orthogonal frequency division multiplexing) symbol.

As one embodiment, one symbol in the present application is a symbol in a slot.

As one embodiment, one symbol in the present application comprises one duration in the time domain.

As one embodiment, at least one repetition among the plurality of repetitions of the first PUSCH comprises at least one symbol indicated by the first RRC signaling to be a downlink symbol.

As one embodiment, at least one repetition among the plurality of repetitions of the first PUSCH occupies at least one symbol indicated by the first RRC signaling to be a downlink symbol in the time domain.

As one embodiment, at least one repetition among the plurality of repetitions of the first PUSCH overlaps with at least one symbol indicated by the first RRC signaling to be a downlink symbol in the time domain.

As one embodiment, in each slot in the first N first-type slots starting from the reference slot, frequency domain resources occupied by one repetition of the first PUSCH do not exceed frequency domain resources occupied by an active UL BWP (Bandwidth part).

As one embodiment, in at least one slot in the first N first-type slots starting from the reference slot, frequency domain resources occupied by the one repetition of the first PUSCH exceed frequency domain resources occupied by an active UL BWP.

As one embodiment, the benefits of the above method comprise: improving the scheduling flexibility.

As one embodiment, the first node uses an unpaired spectrum operation.

As one embodiment, the first node uses operations other than an unpaired spectrum operation.

### Embodiment 2

Embodiment 2 illustrates a schematic diagram of one network architecture according to the present application, as shown in FIG. 2.

FIG. 2 illustrates a diagram of a network architecture 200 of a 5G NR, LTE (Long-Term Evolution) and LTE-A (Long-Term Evolution Advanced) systems. The 5G NR or LTE network architecture 200 may be referred to as EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services. However, those skilled in the art will readily appreciate that the various concepts presented throughout the present application may be extended to networks providing circuit switching services or other cellular networks. The NG-RAN comprises an NR Node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base station transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are conveyed through the S-GW212, wherein the S-GW212 itself is connected to the P-GW213. The P-GW213 provides UE IP address assignment and other functions. The P-GW213 is connected to the Internet service 230. The Internet service 230 comprises operator-corresponding Internet protocol services, which may specifically comprise the Internet, an Intranet, an IMS (IP Multimedia Subsystem) and packet switching streaming services.

As one embodiment, the UE201 corresponds to a first node in the present application.

As one embodiment, the gNB203 corresponds to a second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device that supports large latency differences.

As one embodiment, the gNB203 is one flying platform device.

As one embodiment, the gNB203 is a satellite device.

### Embodiment 3

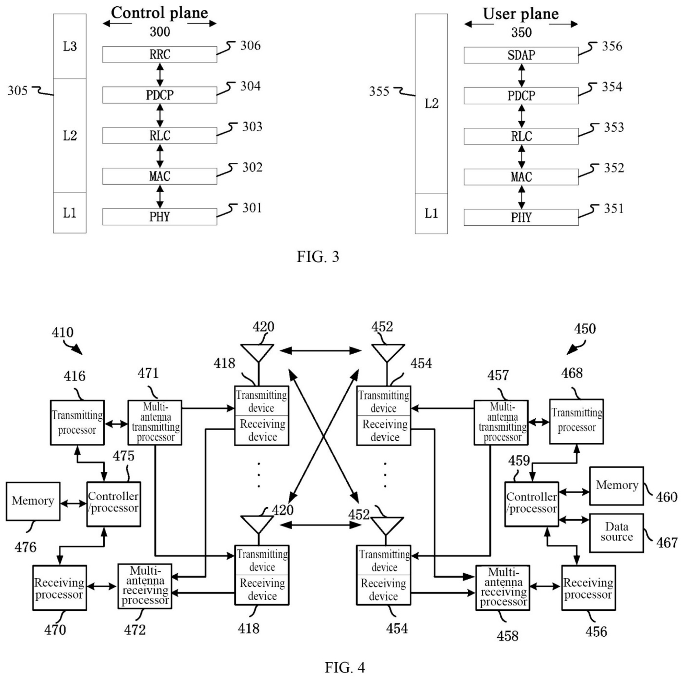

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for a first communication node device (UE, a gNB or an RSU in V2X) and a second communication node device (a gNB, UE or an RSU in V2X), or the control plane 300 between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and is responsible for a link between the first communication node device and the second communication node device as well as between two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to a first node in the present application.

As one embodiment, the wireless protocol architecture in FIG. 3 is applicable to a second node in the present application.

As one embodiment, first RRC signaling in the present application is generated in the RRC sublayer 306.

As one embodiment, a first information block in the present application is generated in the RRC sublayer 306.

As one embodiment, the first information block in the present application is generated in the MAC sublayer 302.

As one embodiment, the first information block in the present application is generated in the PHY301.

As one embodiment, a first PDSCH in the present application is generated at a PHY351.

As one embodiment, a first PUSCH in the present application is generated at the PHY351.

### Embodiment 4

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper layer data packets from a core network are provided to the controller/processor 475. The controller/processor 475 implements the functionality of an L2 layer. In the transmission from the first communication device 410 to the second communication device 450, the controller/processor 475 provides header compression, encryption, packet segmentation and reordering, multiplexing between logical and transport channels, and radio resource assignment to the second communication device 450 based on various priority metrics. The controller/processor 475 is also responsible for retransmission of lost packets and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the second communication device 450. Symbols on each spatial stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover upper layer data packets from the core network. The upper layer data packets are then provided to all protocol layers above the L2 layer. Various control signals may also be provided to an L3 for L3 processing.

In a transmission from the second communication device 450 to the first communication device 410, at the second communication device 450, the data source 467 is used for providing the upper layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource assignment, and implements the functions of the L2 layer for a user plane and a control plane. The controller/processor 459 is also responsible for the retransmission of lost packets and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover upper layer data packets from the UE450. The upper layer data packets from the controller/processor 475 can be provided to the core network.

As one embodiment, a first node in the present application comprises the second communication device 450, and a second node in the present application comprises the first communication device 410.

As one sub-embodiment of the above embodiment, the first node is user equipment, and the second node is a relay node.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for performing error detection using acknowledgement (ACK) and/or negative acknowledgement (NACK) protocols to support HARQ operations.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives first RRC signaling and a first information block, at least one symbol being indicated by the first RRC signaling to be a downlink symbol; receives a first PDSCH, the receiving of the first PDSCH being used for acquiring a first RAR uplink grant; and sends a plurality of repetitions of a first PUSCH in N slots, the first RAR uplink grant being used for scheduling the first PUSCH, the first RAR uplink grant being used for indicating N, and N being a positive integer greater than 1, wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

As one sub-embodiment of the above embodiment, the second communication device 450 corresponds to the first node in the present application.

As one embodiment, the second communication device 450 comprises: a memory storing a computer-readable instruction program, the computer-readable instruction program generating actions when executed by at least one processor, and the actions comprising: receiving the first RRC signaling and the first information block, at least one symbol being indicated by the first RRC signaling to be a downlink symbol; receiving the first PDSCH, the receiving of the first PDSCH being used for acquiring the first RAR uplink grant; and sending the plurality of repetitions of the first PUSCH in the N slots, the first RAR uplink grant being used for scheduling the first PUSCH, the first RAR uplink grant being used for indicating N, and N being a positive integer greater than 1, wherein the N slots are the first N first-type slots starting from the reference slot; in the first N first-type slots starting from the reference slot, the one repetition of the first PUSCH only comprises symbols other than the first type symbol; whether at least one symbol indicated by the first RRC signaling to be a downlink symbol belongs to the first type symbol depends on the first information block; and the reference slot depends on a slot in which the first PDSCH ends.

As one sub-embodiment of the above embodiment, the second communication device 450 corresponds to the first node in the present application.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends the first RRC signaling and the first information block, at least one symbol being indicated by the first RRC signaling to be a downlink symbol; sends the first PDSCH, the first PDSCH carrying the first RAR uplink grant; and receives the plurality of repetitions of the first PUSCH in the N slots, the first RAR uplink grant being used for scheduling the first PUSCH, the first RAR uplink grant being used for indicating N, and N being a positive integer greater than 1, wherein the N slots are the first N first-type slots starting from the reference slot; in the first N first-type slots starting from the reference slot, the one repetition of the first PUSCH only comprises symbols other than the first type symbol; whether at least one symbol indicated by the first RRC signaling to be a downlink symbol belongs to the first type symbol depends on the first information block; and the reference slot depends on a slot in which the first PDSCH ends.

As one sub-embodiment of the above embodiment, the first communication device 410 corresponds to the second node in the present application.

As one embodiment, the first communication device 410 comprises: a memory storing a computer-readable instruction program, the computer-readable instruction program generating actions when executed by at least one processor, and the actions comprising: sending the first RRC signaling and the first information block, at least one symbol being indicated by the first RRC signaling to be a downlink symbol; sending the first PDSCH, the first PDSCH carrying the first RAR uplink grant; and receiving the plurality of repetitions of the first PUSCH in the N slots, the first RAR uplink grant being used for scheduling the first PUSCH, the first RAR uplink grant being used for indicating N, and N being a positive integer greater than 1, wherein the N slots are the first N first-type slots starting from the reference slot; in the first N first-type slots starting from the reference slot, one repetition of the first PUSCH only comprises symbols other than the first type symbol; whether at least one symbol indicated by the first RRC signaling to be a downlink symbol belongs to the first type symbol depends on the first information block; and the reference slot depends on a slot in which the first PDSCH ends.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first RRC signaling in the present application.

As one embodiment, at least one of {the antenna 420, the transmitting device 418, the multi-antenna transmitting processor 471, the transmitting processor 416, the controller/processor 475, and the memory 476} is used for sending the first RRC signaling in the present application.

As one embodiment, at least one of {the antenna 452, the receiving device 454, the multi-antenna receiving processor 458, the receiving processor 456, the controller/processor 459, the memory 460, and the data source 467} is used for receiving the first information block in the present application.

As one embodiment, at least one of {the antenna 420, the transmitting device 418, the multi-antenna transmitting processor 471, the transmitting processor 416, the controller/processor 475, and the memory 476} is used for sending the first information block in the present application.

As one embodiment, at least one of {the antenna 452, the receiving device 454, the multi-antenna receiving processor 458, the receiving processor 456, the controller/processor 459, the memory 460, and the data source 467} is used for receiving the first PDSCH in the present application.

As one embodiment, at least one of {the antenna 420, the transmitting device 418, the multi-antenna transmitting processor 471, the transmitting processor 416, the controller/processor 475, and the memory 476} is used for sending the first PDSCH in the present application.

As one embodiment, at least one of {the antenna 452, the transmitting device 454, the multi-antenna transmitting processor 458, the transmitting processor 468, the controller/processor 459, the memory 460, and the data source 467} is used for sending the plurality of repetitions of the first PUSCH in the present application.

As one embodiment, at least one of {the antenna 420, the receiving device 418, the multi-antenna receiving processor 472, the receiving processor 470, the controller/processor 475, and the memory 476} is used for receiving the plurality of repetitions of the first PUSCH in the present application.

### Embodiment 5

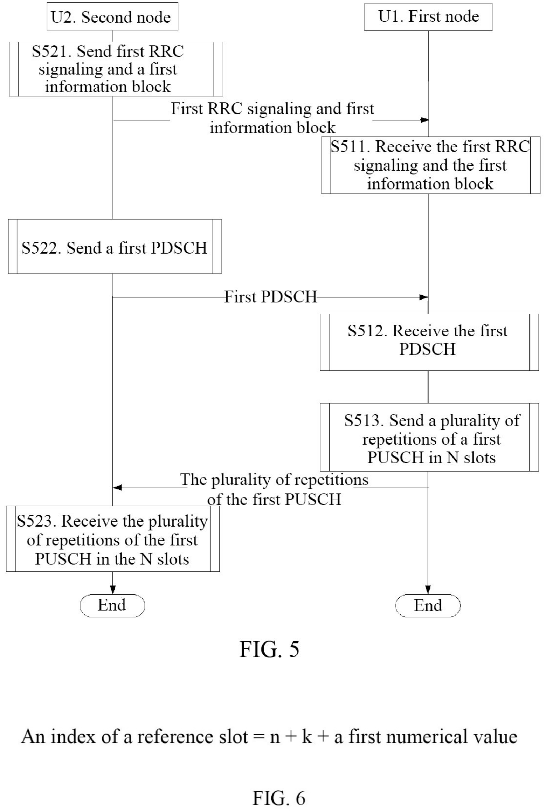

Embodiment 5 illustrates a flow chart of a signal transmission according to one embodiment of the present application, as shown in FIG. 5. In FIG. 5, a first node U1 and a second node U2 communicate through an air interface.

The first node U1 receives first RRC signaling and a first information block in step S511; receives a first PDSCH in step S512; and sends a plurality of repetitions of a first PUSCH in N slots in step S513.

The second node U2 sends the first RRC signaling and the first information block in step S521; sends the first PDSCH in step S522; and receives the plurality of repetitions of the first PUSCH in the N slots in step S523.

In Embodiment 5, at least one symbol is indicated by the first RRC signaling to be a downlink symbol; the receiving of the first PDSCH is used for acquiring a first RAR uplink grant; the first RAR uplink grant is used for scheduling the first PUSCH; and the first RAR uplink grant is used for indicating N, and N is a positive integer greater than 1, wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; symbols that are other than a symbol configured by the first information block to be available for an uplink transmission and are indicated by the first RRC signaling to be downlink symbols belong to the first type symbol; symbols that are configured by the first information block to be available for an uplink transmission and are indicated by the first RRC signaling to be downlink symbols do not belong to the first type symbol; the first RRC signaling is tdd-UL-DL-ConfigurationCommon; and an index of the reference slot is equal to n plus k plus a first numerical value, n is an index of a slot in which the first PDSCH ends, k is a slot offset, and the first numerical value is an additional subcarrier spacing-specific slot delay value for a first transmission of a PUSCH scheduled by an RAR or a fallbackRAR.

As one sub-embodiment of Embodiment 5, the first information block comprises configuration information of resources for a full-duplex mode.

As one sub-embodiment of Embodiment 5, symbols indicated by the first RRC signaling to be uplink symbols do not belong to the first type symbol.

As one sub-embodiment of Embodiment 5, symbols indicated by the first RRC signaling to be uplink symbols belong to the first type symbol.

As one embodiment, the first node U1 is a first node in the present application.

As one embodiment, the second node U2 is a second node in the present application.

As one embodiment, the first node U1 is one piece of UE.

As one embodiment, the second node U2 is one base station.

As one embodiment, an air interface between the second node U2 and the first node U1 is a Uu interface.

As one embodiment, the air interface between the second node U2 and the first node U1 comprises a cellular link.

As one embodiment, the air interface between the second node U2 and the first node U1 comprises a wireless interface between a base station device and user equipment.

As one embodiment, the air interface between the second node U2 and the first node U1 comprises a wireless interface between a satellite device and user equipment.

As one embodiment, the first RRC signaling is received before the first information block.

As one embodiment, the first RRC signaling is received after the first information block.

As one embodiment, the first RRC signaling and the first information block are received simultaneously.

As one embodiment, the expression of "receives the plurality of repetitions of the first PUSCH in the N slots" comprises: the plurality of repetitions of the first PUSCH are respectively in different slots among the N slots in a time domain, and the second node U2 receives at least one transport block conveyed through the plurality of repetitions of the first PUSCH.

As one embodiment, the expression of "receives the plurality of repetitions of the first PUSCH in the N slots" comprises: signals are received in the plurality of repetitions of the first PUSCH in the N slots, and the received signals are combined to acquire user data.

As one embodiment, the expression of "receives the plurality of repetitions of the first PUSCH in the N slots" comprises: signals are received in the plurality of repetitions of the first PUSCH in the N slots, and the part with the best receiving performance is selected from the received signals for processing to acquire user data.

### Embodiment 6

Embodiment 6 illustrates a schematic diagram explaining an index of a reference slot according to one embodiment of the present application, as shown in FIG. 6.

In Embodiment 6, an index of the reference slot is equal to n plus k plus a first numerical value, n is an index of a slot in which a first PDSCH ends, k is a slot offset, and the first numerical value is an additional subcarrier spacing-specific slot delay value for a first transmission of a PUSCH scheduled by an RAR or a fallbackRAR.

As one embodiment, the slot in the present application is viewed from the perspective of an uplink.

As one embodiment, the slot in the present application is viewed from the perspective of sending of a first PUSCH.

As one embodiment, any slot mentioned in the present application comprises a plurality of continuous OFDM symbols.

As one embodiment, k is indicated by a value of a TDRA field of a first RAR uplink grant.

As one embodiment, for the definition of the first numerical value, refer to Table 6.1.2.1.1-5 of 3GPP TS 38.213.

### Embodiment 7

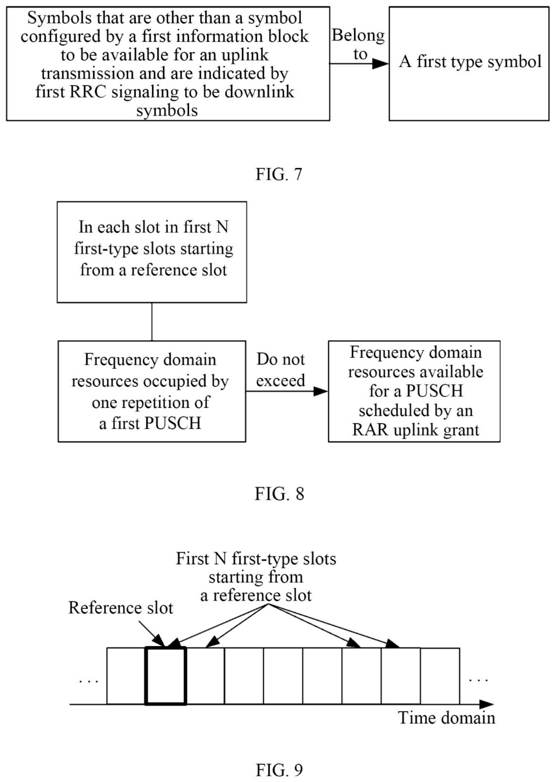

Embodiment 7 illustrates a schematic diagram of a relationship between symbols indicated by first RRC signaling to be downlink symbols and a first type symbol according to one embodiment of the present application, as shown in FIG. 7.

In Embodiment 7, symbols that are other than a symbol configured by a first information block to be available for an uplink transmission and are indicated by the first RRC signaling to be downlink symbols belong to the first type symbol.

As one embodiment, a first symbol is a symbol indicated by the first RRC signaling to be a downlink symbol; if the first symbol is configured by the first information block to be available for an uplink transmission, the first symbol does not belong to the first type symbol; otherwise, the first symbol belongs to the first type symbol.

As one embodiment, symbols indicated by the first RRC signaling to be uplink symbols do not belong to the first type symbol.

As one embodiment, benefits of the above method comprise: a plurality of repetitions of a PUSCH scheduled by an RAR uplink grant may both occupy symbols that are other than a symbol configured by the first information block to be available for an uplink transmission and are indicated by the first RRC signaling to be downlink symbols, and occupy symbols indicated by the first RRC signaling to be uplink symbols, which facilitates the reduction of the transmission delay.

As one embodiment, the benefits of the above method comprise: facilitating the acquisition of a diversity gain.

As one embodiment, symbols indicated by the first RRC signaling to be flexible symbols do not belong to the first type symbol.

As one embodiment, the benefits of the above method comprise: facilitating the reduction of the transmission delay of a first PUSCH.

As one embodiment, the benefits of the above method comprise: facilitating the acquisition of a diversity gain.

As one embodiment, whether symbols indicated by the first RRC signaling to be flexible symbols belong to the first type symbol is configured by the first information block.

As one embodiment, characteristics of the above method comprise: based on a configuration of the first information block, a first node determines which symbols indicated by the first RRC signaling to be flexible symbols may be used for a transmission of a PUSCH scheduled by an RAR uplink grant.

As one embodiment, symbols occupied by an SS/PBCH block (Synchronization Signal and Physical Broadcast Channel Block) having an index provided by ssb-PositionsInBurst belong to the first type symbol.

### Embodiment 8

Embodiment 8 illustrates a schematic diagram explaining frequency domain resources occupied by one repetition of a first PUSCH according to one embodiment of the present application, as shown in FIG. 8.

In Embodiment 8, in each slot in first N first-type slots starting from a reference slot, frequency domain resources occupied by the one repetition of the first PUSCH do not exceed frequency domain resources available for a PUSCH scheduled by an RAR uplink grant.

As one embodiment, whether one slot belongs to the first-type slot is related to a frequency domain resource assignment indicated by a first RAR uplink grant.

As one embodiment, when the frequency domain resource assignment indicated by the first RAR uplink grant exceeds a frequency domain resource available for a PUSCH scheduled by an RAR uplink grant in a target slot, the target slot does not belong to the first-type slot.

As one embodiment, benefits of the above method comprise: ensuring the effectiveness of the scheduling of the first RAR uplink grant.

As one embodiment, in each slot in the first N first-type slots starting from the reference slot, frequency domain resources occupied by the one repetition of the first PUSCH comply with the frequency domain resource assignment indicated by the first RAR uplink grant.

As one embodiment, the frequency domain resource in the present application is viewed from the perspective of an RB (Resource block).

As one embodiment, the frequency domain resource in the present application is viewed from the perspective of a PRB (Physical resource block).

As one embodiment, the frequency domain resource in the present application is viewed from the perspective of a subcarrier.

### Embodiment 9

Embodiment 9 illustrates a schematic diagram explaining first N first-type slots starting from a reference slot according to one embodiment of the present application, as shown in FIG. 9. In FIG. 9, each block represents one slot, each blank block represents one slot that does not belong to the first-type slot, a block with a bold border represents the reference slot, and each gray block represents one slot that belongs to the first-type slot.

In Embodiment 9, N is equal to 4, the reference slot belongs to the first-type slot, and the first N first-type slots starting from the reference slot comprise the reference slot.

### Embodiment 10

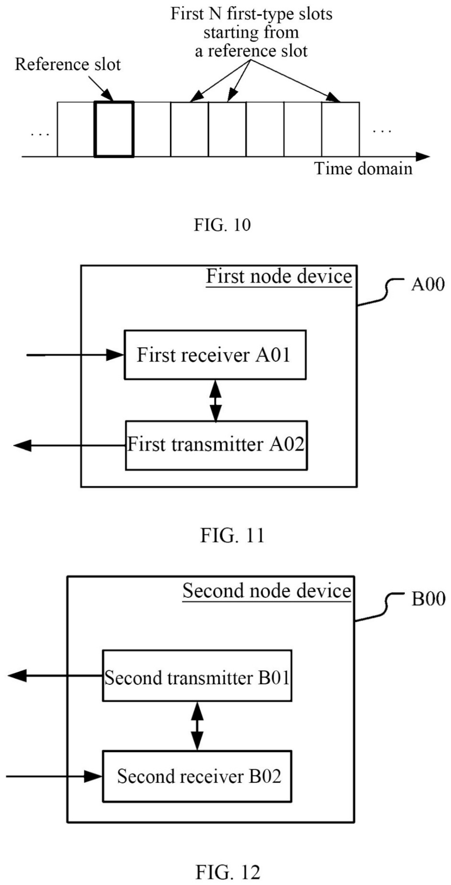

Embodiment 10 illustrates a schematic diagram explaining first N first-type slots starting from a reference slot according to one embodiment of the present application, as shown in FIG. 10. In FIG. 10, each block represents one slot, each blank block represents one slot that does not belong to the first-type slot, a block with a bold border represents the reference slot, and each gray block represents one slot that belongs to the first-type slot.

In Embodiment 10, N is equal to 3, the reference slot does not belong to the first-type slot, and the first N first-type slots starting from the reference slot do not comprise the reference slot.

### Embodiment 11

Embodiment 11 illustrates one structural block diagram of a processing apparatus in a first node device, as shown in FIG. 11. In FIG. 11, a processing apparatus A00 of the first node device comprises a first receiver A01 and a first transmitter A02.

As one embodiment, a first node device A00 is user equipment.

As one embodiment, the first node device A00 is a relay node.

As one embodiment, the first node device A00 is a vehicle-mounted communication device.

As one embodiment, the first node device A00 is conventional user equipment.

As one embodiment, the first node device A00 is a piece of UE supporting a configuration related to full-duplex operations.

As one embodiment, the first receiver A01 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first five of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first three of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first two of the antenna 452, the receiving device 454, the multi-antenna receiving processor 458, the receiving processor 456, the controller/processor 459, the memory 460, and the data source 467 in FIG. 4 of the present application.

As one embodiment, the first transmitter A02 comprises at least one of the antenna 452, a transmitting device 454, a multi-antenna transmitting device processor 457, a transmitting processor 468, the controller/processor 459, the memory 460, and the data source 467 in FIG. 4 of the present application.

As one embodiment, the first transmitter A02 comprises at least the first five of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first four of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first three of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first two of the antenna 452, the transmitting device 454, the multi-antenna transmitting device processor 457, the transmitting processor 468, the controller/processor 459, the memory 460, and the data source 467 in FIG. 4 of the present application.

As one embodiment, the first receiver A01 receives first RRC signaling and a first information block, at least one symbol being indicated by the first RRC signaling to be a downlink symbol; the first receiver A01 receives a first PDSCH, the receiving of the first PDSCH being used for acquiring a first RAR uplink grant; and the first transmitter A02 sends a plurality of repetitions of a first PUSCH in N slots, the first RAR uplink grant being used for scheduling the first PUSCH, the first RAR uplink grant being used for indicating N, and N being a positive integer greater than 1, wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

As one embodiment, the reference slot depends on a first numerical value, and the first numerical value is an additional subcarrier spacing-specific slot delay value for a first transmission of a PUSCH scheduled by an RAR or a fallbackRAR.

As one embodiment, an index of the reference slot is equal to n plus k plus the first numerical value, n is an index of a slot in which the first PDSCH ends, k is a slot offset, and the first numerical value is the additional subcarrier spacing-specific slot delay value for the first transmission of a PUSCH scheduled by an RAR or a fallbackRAR.

As one embodiment, symbols that are other than a symbol configured by the first information block to be available for an uplink transmission and are indicated by the first RRC signaling to be downlink symbols belong to the first type symbol.

As one embodiment, symbols that are configured by the first information block to be available for an uplink transmission and are indicated by the first RRC signaling to be downlink symbols do not belong to the first type symbol.

As one embodiment, symbols indicated by the first RRC signaling to be uplink symbols belong to the first type symbol.

As one embodiment, the first RRC signaling is tdd-UL-DL-ConfigurationCommon.

As one embodiment, in each slot in the first N first-type slots starting from the reference slot, frequency domain resources occupied by the one repetition of the first PUSCH do not exceed frequency domain resources available for a PUSCH scheduled by an RAR uplink grant.

As one embodiment, the first information block comprises configuration information of resources available for full-duplex operations.

### Embodiment 12

Embodiment 12 illustrates a structural block diagram of a processing apparatus in a second node device, as shown in FIG. 12. In FIG. 12, a processing apparatus B00 of the second node device comprises a second transmitter B01 and a second receiver B02.

As one embodiment, a second node device B00 is a base station.

As one embodiment, the second node device B00 is a satellite device.

As one embodiment, the second node device B00 is a relay node.

As one embodiment, the second node device B00 is a base station supporting full-duplex operations.

As one embodiment, the second node device B00 is a base station only supporting half-duplex operations.

As one embodiment, the second node device B00 is one of a test apparatus, test equipment, and a test instrument.

As one embodiment, the second transmitter B01 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver B02 comprises at least one of the antenna 420, a receiving device 418, a multi-antenna receiving processor 472, a receiving processor 470, the controller/processor 475, and the memory 476 in FIG. 4 of the present application.

As one embodiment, the second receiver B02 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter B01 sends first RRC signaling and a first information block, at least one symbol being indicated by the first RRC signaling to be a downlink symbol; the second transmitter B01 sends a first PDSCH, the first PDSCH carrying a first RAR uplink grant; and the second receiver B02 receives a plurality of repetitions of a first PUSCH in N slots, the first RAR uplink grant being used for scheduling the first PUSCH, the first RAR uplink grant being used for indicating N, and N being a positive integer greater than 1, wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

As one embodiment, the reference slot depends on a first numerical value, and the first numerical value is an additional subcarrier spacing-specific slot delay value for a first transmission of a PUSCH scheduled by an RAR or a fallbackRAR.

As one embodiment, an index of the reference slot is equal to n plus k plus the first numerical value, n is an index of a slot in which the first PDSCH ends, k is a slot offset, and the first numerical value is the additional subcarrier spacing-specific slot delay value for the first transmission of a PUSCH scheduled by an RAR or a fallbackRAR.

As one embodiment, symbols that are other than a symbol configured by the first information block to be available for an uplink transmission and are indicated by the first RRC signaling to be downlink symbols belong to the first type symbol.

As one embodiment, symbols that are configured by the first information block to be available for an uplink transmission and are indicated by the first RRC signaling to be downlink symbols do not belong to the first type symbol.

As one embodiment, symbols indicated by the first RRC signaling to be uplink symbols belong to the first type symbol.

As one embodiment, the first RRC signaling is tdd-UL-DL-ConfigurationCommon.

As one embodiment, in each slot in the first N first-type slots starting from the reference slot, frequency domain resources occupied by the one repetition of the first PUSCH do not exceed frequency domain resources available for a PUSCH scheduled by an RAR uplink grant.

As one embodiment, the first information block comprises configuration information of resources available for full-duplex operations.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combinations. A first node device in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The second node device in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The user equipment or UE or terminal in the present application includes but is not limited to mobile phones, tablet computers, notebook computers, network access cards, low-power-consumption devices, eMTC devices, NB-IoT devices, vehicle-mounted communication devices, aircrafts, airplanes, drones, remote-controlled airplanes and other wireless communication devices. The base station device or base station or network-side device in the present application includes but is not limited to macrocellular base stations, microcellular base stations, femtocells, relay base stations, eNBs, gNBs, transmitter receiver points (TRPs), GNSS, relay satellites, satellite base stations, air base stations, test apparatuses, test equipment, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the appended claims rather than the foregoing description, and all modifications within their equivalent meanings and areas are considered to be comprised therein.

## Claims

1. A first node for wireless communication, comprising:
a first receiver receiving first RRC signaling and a first information block, at least one symbol being indicated by the first RRC signaling to be a downlink symbol;
the first receiver receiving a first PDSCH, the receiving of the first PDSCH being used for acquiring a first RAR uplink grant; and
a first transmitter sending a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

2. The first node according to claim 1, wherein the reference slot depends on a first numerical value, and the first numerical value is an additional subcarrier spacing-specific slot delay value for a first transmission of a PUSCH scheduled by an RAR or a fallbackRAR.

3. The first node according to claim 1 or 2, wherein symbols that are other than a symbol configured by the first information block to be available for an uplink transmission and are indicated by the first RRC signaling to be downlink symbols belong to the first type symbol; and symbols that are configured by the first information block to be available for the uplink transmission and are indicated by the first RRC signaling to be downlink symbols do not belong to the first type symbol.

4. The first node according to any one of claims 1 to 3, wherein symbols indicated by the first RRC signaling to be uplink symbols belong to the first type symbol.

5. The first node according to any one of claims 1 to 4, wherein the first RRC signaling comprises tdd-UL-DL-ConfigurationCommon.

6. The first node according to any one of claims 1 to 5, wherein in each slot in the first N first-type slots starting from the reference slot, frequency domain resources occupied by the one repetition of the first PUSCH do not exceed frequency domain resources available for a PUSCH scheduled by an RAR uplink grant.

7. The first node according to any one of claims 1 to 6, wherein the first information block comprises configuration information of resources available for full-duplex operations.

8. A second node for wireless communication, comprising:
a second transmitter sending first RRC signaling and a first information block, at least one symbol being indicated by the first RRC signaling to be a downlink symbol;
the second transmitter sending a first PDSCH, the first PDSCH carrying a first RAR uplink grant; and
a second receiver receiving a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

9. The second node according to claim 8, wherein the reference slot depends on a first numerical value, and the first numerical value is an additional subcarrier spacing-specific slot delay value for a first transmission of a PUSCH scheduled by an RAR or a fallbackRAR.

10. The second node according to claim 8 or 9, wherein symbols that are other than a symbol configured by the first information block to be available for an uplink transmission and are indicated by the first RRC signaling to be downlink symbols belong to the first type symbol; and symbols that are configured by the first information block to be available for the uplink transmission and are indicated by the first RRC signaling to be downlink symbols do not belong to the first type symbol.

11. The second node according to any one of claims 8 to 10, wherein symbols indicated by the first RRC signaling to be uplink symbols belong to the first type symbol.

12. The second node according to any one of claims 8 to 11, wherein the first RRC signaling comprises tdd-UL-DL-ConfigurationCommon.

13. The second node according to any one of claims 8 to 12, wherein in each slot in the first N first-type slots starting from the reference slot, frequency domain resources occupied by the one repetition of the first PUSCH do not exceed frequency domain resources available for a PUSCH scheduled by an RAR uplink grant.

14. The second node according to any one of claims 8 to 13, wherein the first information block comprises configuration information of resources available for full-duplex operations.

15. A method used in a first node for wireless communication, comprising:
receiving first RRC signaling and a first information block, at least one symbol being indicated by the first RRC signaling to be a downlink symbol;
receiving a first PDSCH, the receiving of the first PDSCH being used for acquiring a first RAR uplink grant; and
sending a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

16. The method used in a first node according to claim 15, wherein the reference slot depends on a first numerical value, and the first numerical value is an additional subcarrier spacing-specific slot delay value for a first transmission of a PUSCH scheduled by an RAR or a fallbackRAR.

17. The method used in a first node according to claim 15 or 16, wherein symbols that are other than a symbol configured by the first information block to be available for an uplink transmission and are indicated by the first RRC signaling to be downlink symbols belong to the first type symbol; and symbols that are configured by the first information block to be available for the uplink transmission and are indicated by the first RRC signaling to be downlink symbols do not belong to the first type symbol.

18. The method used in a first node according to any one of claims 15 to 17, wherein symbols indicated by the first RRC signaling to be uplink symbols belong to the first type symbol.

19. The method used in a first node according to any one of claims 15 to 18, wherein the first RRC signaling comprises tdd-UL-DL-ConfigurationCommon.

20. The method used in a first node according to any one of claims 15 to 19, wherein in each slot in the first N first-type slots starting from the reference slot, frequency domain resources occupied by the one repetition of the first PUSCH do not exceed frequency domain resources available for a PUSCH scheduled by an RAR uplink grant.

21. The method used in a first node according to any one of claims 15 to 20, wherein the first information block comprises configuration information of resources available for full-duplex operations.

22. A method used in a second node for wireless communication, comprising:
sending first RRC signaling and a first information block, at least one symbol being indicated by the first RRC signaling to be a downlink symbol;
sending a first PDSCH, the first PDSCH carrying a first RAR uplink grant; and
receiving a plurality of repetitions of a first PUSCH in N slots, the first RAR uplink grant being used for scheduling the first PUSCH, the first RAR uplink grant being used for indicating N, and N being a positive integer greater than 1,
wherein the N slots are first N first-type slots starting from a reference slot; in the first N first-type slots starting from the reference slot, one repetition of the first PUSCH only comprises symbols other than a first type symbol; whether at least one symbol indicated by the first RRC signaling to be a downlink symbol belongs to the first type symbol depends on the first information block; and the reference slot depends on a slot in which the first PDSCH ends.

23. The method used in a second node according to claim 22, wherein the reference slot depends on a first numerical value, and the first numerical value is an additional subcarrier spacing-specific slot delay value for a first transmission of a PUSCH scheduled by an RAR or a fallbackRAR.

24. The method used in a second node according to claim 22 or 23, wherein symbols that are other than a symbol configured by the first information block to be available for an uplink transmission and are indicated by the first RRC signaling to be downlink symbols belong to the first type symbol; and symbols that are configured by the first information block to be available for the uplink transmission and are indicated by the first RRC signaling to be downlink symbols do not belong to the first type symbol.

25. The method used in a second node according to any one of claims 22 to 24, wherein symbols indicated by the first RRC signaling to be uplink symbols belong to the first type symbol.

26. The method used in a second node according to any one of claims 22 to 25, wherein the first RRC signaling comprises tdd-UL-DL-ConfigurationCommon.

27. The method used in a second node according to any one of claims 22 to 26, wherein in each slot in the first N first-type slots starting from the reference slot, frequency domain resources occupied by the one repetition of the first PUSCH do not exceed frequency domain resources available for a PUSCH scheduled by an RAR uplink grant.

28. The method used in a second node according to any one of claims 22 to 27, wherein the first information block comprises configuration information of resources available for full-duplex operations.
